# EUROPÄISCHE PATENTSCHRIFT

(11) **EP 3 164 534 B1**
(45) Veröffentlichungstag und Bekanntmachung des Hinweises auf die Patenterteilung: **19.10.2022**
(21) Anmeldenummer: 15727626.2
(22) Anmeldetag: 02.06.2015
(51) Int. Cl.: D04B 35/28, F16N 19/00, F16N 39/06, F16N 7/40

(54) **ALTÖLAUFBEREITUNGSEINRICHTUNG FÜR EINE RUNDSTRICKMASCHINE**
USED-OIL RECLAMATION DEVICE FOR A CIRCULAR KNITTING MACHINE
DISPOSITIF DE RÉGÉNÉRATION D'HUILE USAGÉE POUR MACHINE À TRICOTER CIRCULAIRE

(30) Priorität: 03.07.2014 DE 102014109303
(43) Veröffentlichungstag der Anmeldung: 10.05.2017
(73) Patentinhaber: SIPRA Patententwicklungs- und Beteiligungsgesellschaft mbH, 72461 Albstadt (DE)
(72) Erfinder: RAIC, Zoran, 72393 Burladingen (DE); BAUER, Wolfgang, 70806 Kornwestheim (DE); HERRE, Michael, 72336 Balingen (DE)
(74) Vertreter: Kohler Schmid Möbus Patentanwälte
(86) Internationale Anmeldenummer: PCT/EP2015/062232
(87) Internationale Veröffentlichungsnummer: WO 2016/000896

(56) Entgegenhaltungen:
- EP-A1- 0 499 810
- WO-A1-02/31323
- CN-U- 203 068 103
- CN-U- 203 215 229
- FR-A- 1 065 824
- JP-A- H0 824 933
- JP-A- H04 131 594
- JP-A- 2000 337 119
- US-A- 3 270 836
- US-A- 5 970 942
- US-A1- 2004 211 386

## Beschreibung

Rundstrickmaschinen benötigen nicht unerhebliche Mengen an Öl, um insbesondere die sich mit sehr hohen Geschwindigkeiten bewegenden Nadeln und Platinen zu schmieren und damit einem vorzeitigen Verschleiß dieser Bauteile entgegenzuwirken.

Das in der Maschine anfallende Altöl wird bislang entsorgt oder in einer externen Reinigungseinheit wiederaufbereitet.

Die US 3 270 836 A beschreibt ein Schmiersystem für ein Lager, bei dem gebrauchtes Schmieröl in einem Sammelbehälter mit zwei Pumpen aufgefangen wird. Die erste Pumpe fördert das aufgefangene Altöl nach Erreichen eines Mindestfüllstands im Sammelbehälter wieder zur Schmierstelle. Die zweite Pumpe ist eine Hilfspumpe, die aktiviert wird, wenn die erste Pumpe allein nicht in der Lage ist, ein Überfließen des Sammelbehälters zu verhindern.

Die US 5970942 A, WO 0231323 A1 beschreiben jeweils Schmierölüberwachungssysteme von Verbrennungsmotoren, bei denen frisches Öl zugegeben wird, sobald der Ölspiegel in einem Altölauffangbehälter bzw. die Qualität des aufgefangenen Altöls unter einen bestimmten Wert sinkt.

Aus der CN 203215229 U ist ein Schmierölsystem für Produktionslinien bekannt, bei dem Altöl mit neuem Öl gemischt wird, sofern nicht genügend Altöl mehr vorhanden ist, um die Produktionslinie ausreichend mit Schmieröl zu versorgen.

Der vorliegenden Erfindung liegt die Aufgabe zugrunde, an der Rundstrickmaschine eine Möglichkeit für die Wiederaufbereitung von Altöl zu schaffen, um den Ölverbrauch der Maschine bei weiterhin guter Schmierung reduzieren zu können.

Die Aufgabe wird gelöst durch eine Altölaufbereitungseinrichtung für eine Rundstrickmaschine mit einem Altölsammelbehälter zum Auffangen des Altöls aus der Maschine und mit einem Vorratsbehälter für gefiltertes Altöl und neues Öl, sowie einer zwischen den Behältern angeordneten Verbindungsleitung und mindestens einer Filtereinrichtung, wobei in beiden Behältern Füllstandmesseinrichtungen vorgesehen sind, die mit einer Steuereinrichtung verbunden sind, mit der eine Ölförderpumpe des Altölsammelbehälters ansteuerbar ist. Vorzugsweise kann dabei die Verbindungsleitung über eine Filtereinrichtung geführt sein. Weiter können der Altölsammelbehälter und der Vorratsbehälter für gefiltertes Altöl und neues Öl auch als separate Kammern eines gemeinsamen Behälters ausgeführt sein.

Die erfindungsgemäße Einrichtung erlaubt eine vollautomatische Wiederaufbereitung des Altöls, das gereinigt im Frischölbehälter gespeichert und der Rundstrickmaschine erneut zugeführt wird. Es lassen sich dadurch Einsparungen im Ölverbrauch von bis zu 30 % erzielen. Damit verbunden ist eine erhebliche Kostenersparnis, nicht zuletzt auch wegen der teuren Altölentsorgung.

Bei einer vorteilhaften Ausgestaltung der Einrichtung ist an einem Einlass des Altölsammelbehälters ein Grobfilter für das aufgefangene Altöl der Strickmaschine angeordnet. Grobe Schmutzpartikel werden dadurch zurückgehalten und gelangen nicht in den Altölsammelbehälter. Der Grobfilter kann bei Bedarf durch den Einlass entnommen und gereinigt oder ersetzt werden.

Weitere Vorteile ergeben sich, wenn im Altölsammelbehälter mindestens ein Magnet zum Absondern der metallischen Bestandteile im Altöl angeordnet ist. Vorzugsweise können dazu ein oder mehrere Magnetstäbe im Bereich des Einlasses des Altölsammelbehälters angeordnet sein. Das Altöl kommt nur in sehr geringen Mengen in Tropfenform aus der Maschine zurück. Diese Tropfen rinnen entlang der Magnetstäbe. Die darin enthaltenen Metallteile bleiben dabei an der Oberfläche der Stäbe haften.

Als weitere Vorreinigungsmaßnahme kann die Ölförderpumpe des Altölsammelbehälters das Öl durch ein Feinfilter ansaugen. Die Filtereinrichtung in der Verbindungsleitung zum Frischölbehälter wird dadurch entlastet und setzt sich weniger schnell zu.

Bei einer möglichen Ausgestaltung der Altölaufbereitungseinrichtung ist auch im Frischölbehälter eine Ölförderpumpe zur Zuführung des Öls zu der Strickmaschine angeordnet. Die Ölförderpumpe könnte jedoch auch außerhalb des Frischölbehälters platziert werden.

Da ein Teil des Öls durch die Maschine verbraucht wird, ist es notwendig, der Maschine neben dem aufbereiteten Altöl auch neues Öl zuzuführen. Dazu kann der Frischölbehälter einen Einlass mit einem nachgeschalteten Grobfilter zum manuellen Einfüllen von neuem Öl aufweisen. Der Grobfilter stellt sicher, dass beim Einfüllen von neuem Öl keine Verschmutzungen in den Frischölbehälter gelangen.

Weitere Vorteile lassen sich erzielen, wenn in der Verbindungsleitung eine Durchflussüberwachungseinrichtung angeordnet ist. Die Durchflussüberwachungseinrichtung kann ebenfalls mit der Steuereinrichtung gekoppelt sein. Die Steuereinrichtung kann dann die Ölförderpumpe des Altölsammelbehälters deaktivieren, wenn die Durchflussüberwachungseinrichtung aufgrund eines Zusetzens der Filter keinen oder nur einen sehr geringen Öldurchfluss in der Verbindungsleitung detektiert. Bei einem nachlassenden Durchfluss durch ein Zusetzen der Filter kann außerdem ein Warnsignal ausgegeben werden, das die Notwendigkeit eines Filterwechsels anzeigt.

Um ein Überlaufen des Altölsammelbehälters zu vermeiden, kann die Steuereinrichtung die Ölförderpumpe des Altölsammelbehälters aktivieren, wenn die Füllstandmesseinrichtung das Erreichen eines Maximalwerts für den Ölspiegel im Altölsammelbehälter detektiert. Es wird nun Altöl durch die Filtereinrichtung in den Frischölbehälter geleitet.

Ein Überlaufen des Frischölbehälters kann dadurch verhindert werden, dass die Ölförderpumpe des Altölsammelbehälters deaktiviert wird, wenn die Füllstandmesseinrichtung im Frischölbehälter ein Überschreiten eines Maximalwerts für den Ölspiegel im Frischölbehälter detektiert.

Die Steuereinrichtung kann außerdem die Ölförderpumpen in beiden Behältern deaktivieren, wenn die Füllstandmesseinrichtung in dem jeweiligen Behälter das Unterschreiten eines Minimalwerts für den Ölspiegel detektiert. Dadurch kann ein Leerlaufen der Pumpen zuverlässig vermieden werden.

Die Füllstandmesseinrichtung im neuen Öl misst den exakten Ölspiegel, sodass sichergestellt wird, dass das Mischungsverhältnis zwischen aufbereitetem Altöl und neuem Öl konstant gehalten werden kann, das heißt stets ausreichend Additive in dem der Strickmaschine zugeführten neuen Öl vorhanden sind.

Es kann jedoch auch ein dritter Behälter für neues Öl vorgesehen werden, der mit dem Frischölbehälter verbunden ist und eine mit der Steuereinrichtung verbundene Ölförderpumpe aufweist. Die Steuereinrichtung kann dann die Ölförderpumpe im dritten Behälter derart aktivieren, dass im Frischölbehälter stets mehr neues Öl als aufbereitetes Altöl vorhanden ist, wobei der Zufluss von aufbereitetem Altöl aus dem Altölsammelbehälter und neuem Öl aus dem dritten Behälter über Durchflussmesseinrichtungen messbar ist. Die Steuereinrichtung kann dabei das Mischungsverhältnis zwischen aufbereitetem Altöl und neuem Öl auch auf einen konstanten Wert regeln.

Die Erfindung betrifft außerdem eine Rundstrickmaschine mit einer erfindungsgemäßen Altölaufbereitungseinrichtung, wobei die Altölaufbereitungseinrichtung am Gestell der Rundstrickmaschine angeordnet ist.

Dabei kann die Altölfördereinrichtung an der Rundstrickmaschine vorzugsweise nachrüstbar sein, um auch bereits im Betrieb befindliche Maschinen zu einer erfindungsgemäßen Rundstrickmaschine ausbauen zu können.

Nachfolgend wird eine bevorzugte Ausgestaltung einer Altölaufbereitungseinrichtung nach der Erfindung mit Bezug auf die Zeichnung näher erläutert.

Es zeigen:
- Fig. 1: eine schematische Darstellung einer ersten Altölaufbereitungseinrichtung;
- Fig. 2: eine schematische Darstellung einer zweiten Altölaufbereitungseinrichtung.

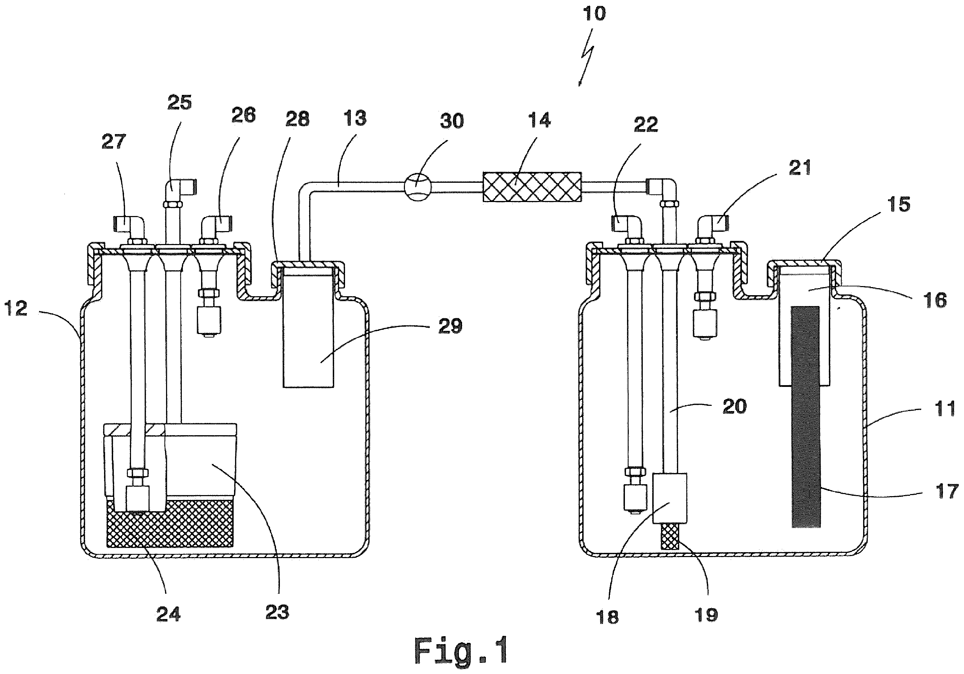

Fig. 1 zeigt eine Altölaufbereitungseinrichtung 10 mit einem Altölsammelbehälter 11 und einem Frischölbehälter 12. Die beiden Behälter 11 und 12 sind über eine Verbindungsleitung 13 miteinander verbunden. Die Verbindungsleitung 13 ist über eine Filtereinrichtung 14 geführt.

Das aus einer hier nicht näher dargestellten Rundstrickmaschine stammende Altöl gelangt tropfenweise durch einen Einlass 15 in den Altölsammelbehälter 11. Im Bereich des Einlasses 15 sind ein Grobfilter 16 zum Ausfiltern grober Partikel sowie ein Magnetstab 17 zum Aussondern metallischer Bestandteile aus dem Altöl angeordnet. Weiter weist der Altölsammelbehälter 11 eine Ölförderpumpe 18 auf, die das Altöl über ein Feinfilter 19 ansaugt und über eine Steigleitung 20 der Verbindungsleitung 13 mit der Filtereinrichtung 14 zuführt. Im Behälter 11 ist außerdem eine Füllstandmesseinrichtung, die hier aus einem Sensor 21 für einen maximalen Ölspiegel und einem Sensor 22 für einen minimalen Ölspiegel besteht, angeordnet. Die Sensoren 21, 22 sind mit einer nicht näher dargestellten Steuereinrichtung verbunden, mit der die Pumpe 18 ansteuerbar ist.

Auch im Frischölbehälter 12 ist eine Ölförderpumpe 23 angeordnet, die das neue Öl über ein Feinfiltersystem 24 ansaugt und zu einem Auslass 25 transportiert, der mit der Strickmaschine beispielsweise über eine Schlauchleitung (nicht gezeigt) verbunden werden kann. Die Pumpe 23 ist ebenso wie eine Füllstandmesseinrichtung, bestehend aus einem Sensor 26 für einen maximalen Ölspiegel und einem Sensor 27 für einen minimalen Ölspiegel, mit der Steuereinrichtung verbunden. Weiter ist am Frischölbehälter 12 ein Einlass 28 zum Nachfüllen von neuem Öl vorgesehen, mit dem das von der Strickmaschine verbrauchte Altöl ersetzt wird. Auch die Verbindungsleitung 13 ist durch diesen Einlass 28 geführt. Um beim manuellen Nachfüllen von neuem Öl den Eintritt von Verschmutzungen in den Behälter 12 zu vermeiden, ist im Bereich des Einlasses 28 ein Grobfilter 29 vorgesehen.

Sobald der Sensor 21 im Altölsammelbehälter 11 das Erreichen des maximalen Ölspiegels detektiert, wird über die Steuereinrichtung die Pumpe 18 aktiviert, die Altöl über die Filtereinrichtung 14 und die Verbindungsleitung dem Frischölbehälter 12 zuführt. In der Verbindungsleitung 13 ist dabei eine Durchflussüberwachungseinrichtung 30 vorgesehen, die ein Zusetzen der Filtereinrichtung 14 detektiert und über die Steuereinrichtung in einem solchen Fall die Pumpe 18 stoppt. Wird im Frischölbehälter 12 vom Sensor 26 das Erreichen des maximalen Ölspiegels detektiert, wird die Pumpe 18 ebenfalls von der Steuereinrichtung gestoppt. Die Sensoren 21 und 26 dienen daher dazu, ein Überlaufen der Behälter 11 und 12 zu vermeiden. Die Sensoren 22 und 27 für einen minimalen Ölspiegel in den Behältern 11 und 12 dagegen verhindern im Zusammenwirken mit der Steuereinrichtung ein Leerlaufen der Pumpen 18 und 23.

Die Füllstandmesseinrichtung insbesondere im Frischölbehälter 12 könnte den Ölspiegel auch genau messen. Dies würde ermöglichen, das Mischungsverhältnis zwischen aufbereitetem Altöl und nachgefülltem neuem Öl im Frischölbehälter stets konstant zu halten. Ein bestimmter Prozentsatz an neuem Öl ist notwendig, da die im Öl enthaltenen Additive bei der Altölaufbereitung verloren gehen.

Die Altölaufbereitungseinrichtung 10 weist zwei unabhängig voneinander in der Rundstrickmaschine montierbare Behälter 11 und 12 auf, sodass sie leicht an bestehenden Rundstrickmaschinen nachgerüstet werden kann.

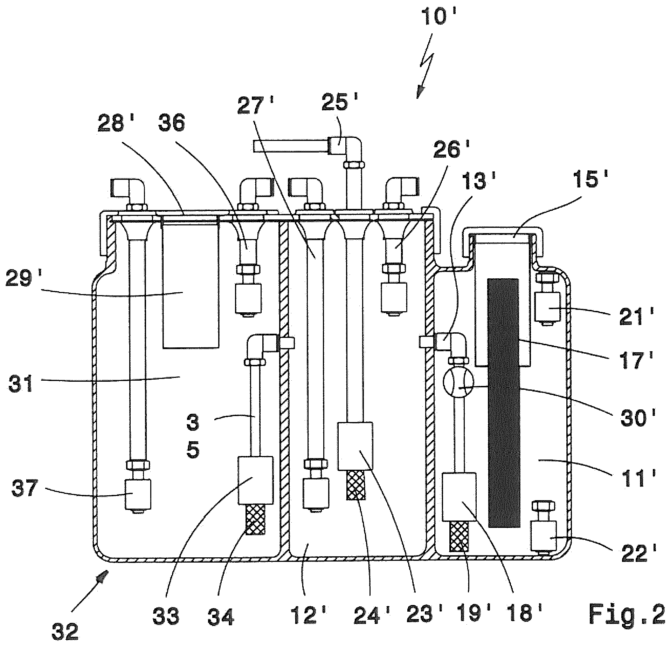

Im Gegensatz zur Altölaufbereitungseinrichtung 10 weist die in Fig. 2 gezeigte Altölaufbereitungseinrichtung 10' nur einen einzigen Behälter 32 auf. Der Altölsammelbehälter 11' und der Frischölbehälter 12' sind als separate Kammern des Behälters 32 ausgebildet. Weiter ist ein dritter Behälter 31 für neues Öl als Kammer im Behälter 32 integriert.

Das aus der Rundstrickmaschine stammende Altöl wird dem Altölsammelbehälter 11' über einen Einlass 15' zugeführt. Diesem nachgeordnet ist wieder ein Magnetstab 17' zum Aussondern von Metallpartikeln vorgesehen. Die Verbindungsleitung 13' zum Frischölbehälter 12' sowie eine Filtereinrichtung 14' und eine Durchflussmesseinrichtung 30' sind bei der Aufbereitungseinrichtung 10' nun innerhalb des Altölsammelbehälters 11' angeordnet. Das Altöl wird wieder über eine Pumpe 18' und ein Feinfilter 19' angesaugt und in den Frischölbehälter 12' geleitet. Weiter sind wieder Sensoren 21' und 22' für einen maximalen und einen minimalen Ölspiegel im Altölsammelbehälter vorgesehen.

Im Frischölbehälter 12' sind neben Sensoren 26' und 27' für einen maximalen und den minimalen Ölspiegel eine Ölförderpumpe 23' angeordnet, die das neue Öl über einen Feinfilter 24' ansaugt und über einen Auslass 25' der Rundstrickmaschine zuführt.

Der dritte Behälter 31 für neues Öl weist einen Einlass 28' zum manuellen Nachfüllen von neuem Öl auf. Diesem nachgeschaltet ist ein Grobfilter 29'. Weiter ist eine Ölförderpumpe 33 vorgesehen, die das neue Öl über einen Feinfilter 34 ansaugt und über eine Rohrverbindung 35 dem Frischölbehälter 12' zuleitet. Der Behälter 31 weist außerdem Sensoren 36, 37 für einen maximalen und einen minimalen Ölspiegel auf.

Die Steuerung des Ölflusses zwischen dem Altölsammelbehälter 11' und dem Frischölbehälter 12' ist die gleiche wie bei der Altölaufbereitungseinrichtung 10 aus Fig. 1. Zusätzlich wird jedoch die Zufuhr von neuem Öl aus dem Behälter 31 in den Frischölbehälter abhängig vom Signal der Durchflussmesseinrichtung 30' derart gesteuert, dass im Frischölbehälter 12' stets ein konstantes Verhältnis von aufbereitetem Altöl und neuem Öl vorhanden ist. Dadurch kann sichergestellt werden, dass das der Rundstrickmaschine zugeführte neue Öl stets ausreichend Additive enthält.

## Patentansprüche

1. Altölaufbereitungseinrichtung für eine Rundstrickmaschine mit einem Altölsammelbehälter (11, 11') zum Auffangen des Altöls aus der Maschine und mit einem Vorratsbehälter (12, 12') für gefiltertes Altöl und neues Öl, sowie einer zwischen den Behältern (11, 12; 11', 12') angeordneten Verbindungsleitung (13, 13') und mindestens einer Filtereinrichtung (14, 16, 19; 14', 16', 19'), wobei in beiden Behältern (11, 12; 11', 12') Füllstandmesseinrichtungen (21, 22; 26, 27; 21', 22'; 26', 27') vorgesehen sind, die mit einer Steuereinrichtung verbunden sind, mit der eine Ölförderpumpe (18, 18') des Altölsammelbehälters ansteuerbar ist, und dass die Füllstandsmesseinrichtung (26, 27, 26', 27') im Behälter (12, 12') für neues Öl den exakten Ölspiegel misst, sodass sichergestellt wird, dass das Mischungsverhältnis zwischen aufbereitetem Altöl und neuem Öl konstant gehalten werden kann.

2. Altölaufbereitungseinrichtung nach Anspruch 1, **dadurch gekennzeichnet, dass** die Verbindungsleitung (13, 13') über eine Filtereinrichtung (14, 14') geführt ist.

3. Altölaufbereitungseinrichtung nach Anspruch 1 oder 2, **dadurch gekennzeichnet, dass** der Altölsammelbehälter (11') und der Frischölbehälter (12') als separate Kammern eines gemeinsamen Behälters (32) ausgebildet sind.

4. Altölaufbereitungseinrichtung nach einem der vorhergehenden Ansprüche, **dadurch gekennzeichnet, dass** an einem Einlass (15, 15') des Altölsammelbehälters (11, 11') ein Grobfilter (16, 16') für das aufgefangene Altöl der Strickmaschine angeordnet ist.

5. Altölaufbereitungseinrichtung nach einem der vorhergehenden Ansprüche, **dadurch gekennzeichnet, dass** im Altölsammelbehälter (11, 11') mindestens ein Magnet (17, 17') zum Absondern der metallischen Bestandteile im Altöl angeordnet ist.

6. Altölaufbereitungseinrichtung nach Anspruch 5, **dadurch gekennzeichnet, dass** ein oder mehrere Magnetstäbe (17, 17') im Bereich des Einlasses (15, 15') des Altölsammelbehälters angeordnet sind.

7. Altölaufbereitungseinrichtung nach einem der vorhergehenden Ansprüche, **dadurch gekennzeichnet, dass** die Ölförderpumpe (18, 18') des Altölsammelbehälters das Öl durch ein Feinfilter (19, 19') ansaugt.

8. Altölaufbereitungseinrichtung nach einem der vorhergehenden Ansprüche, **dadurch gekennzeichnet, dass** im Frischölbehälter (12, 12') eine Ölförderpumpe (23, 23') zur Zuführung des Öls zu der Strickmaschine angeordnet ist.

9. Altölaufbereitungseinrichtung nach einem der vorhergehenden Ansprüche, **dadurch gekennzeichnet, dass** der Frischölbehälter (12) einen Einlass (28) mit einem nachgeschalteten Grobfilter (29) zum manuellen Einfüllen von neuem Öl aufweist.

10. Altölaufbereitungseinrichtung nach einem der vorhergehenden Ansprüche, **dadurch gekennzeichnet, dass** in der Verbindungsleitung (13, 13') eine Durchflussüberwachungseinrichtung (30, 30') angeordnet ist.

11. Altölaufbereitungseinrichtung nach einem der vorhergehenden Ansprüche, **dadurch gekennzeichnet, dass** die Steuereinrichtung die Ölförderpumpe (18, 18') des Altölsammelbehälters (11, 11') aktiviert, wenn die Füllstandmesseinrichtung (22, 23; 22', 23') das Erreichen eines Maximalwerts für den Ölspiegel im Altölsammelbehälter (11, 11') detektiert.

12. Altölaufbereitungseinrichtung nach einem der vorhergehenden Ansprüche, **dadurch gekennzeichnet, dass** die Ölförderpumpe (18, 18') des Altölsammelbehälters (12; 12') deaktiviert ist, wenn die Füllstandmesseinrichtung (26, 27; 26', 27') im Frischölbehälter (12, 12') ein Überschreiten eines Maximalwerts für den Ölspiegel im Frischölbehälter (12, 12') detektiert.

13. Altölaufbereitungseinrichtung nach einem der vorhergehenden Ansprüche, **dadurch gekennzeichnet, dass** die Steuereinrichtung die Ölförderpumpe (18, 18') des Altölsammelbehälters (11, 11') deaktiviert, wenn die Durchflussüberwachungseinrichtung (30, 30') keinen oder nur einen sehr geringen Öldurchfluss in der Verbindungsleitung (13, 13') detektiert.

14. Altölaufbereitungseinrichtung nach einem der vorhergehenden Ansprüche, **dadurch gekennzeichnet, dass** die Steuereinrichtung die Ölförderpumpen (18, 23; 18', 23') beider Behälter (11, 12; 11', 12') deaktiviert, wenn die Füllstandmesseinrichtung (21, 22; 26, 27; 21', 22'; 26', 27') in dem jeweiligen Behälter (11, 12; 11', 12') das Unterschreiten eines Minimalwerts für den Ölspiegel detektiert.

15. Altölaufbereitungseinrichtung nach einem der vorhergehenden Ansprüche, **dadurch gekennzeichnet, dass** sie einen dritten Behälter (31) mit neuem Öl aufweist, der mit dem Frischölbehälter (12') verbunden ist und eine mit der Steuereinrichtung verbundene Ölförderpumpe (33) aufweist.

16. Altölaufbereitungseinrichtung nach Anspruch 15, **dadurch gekennzeichnet, dass** die Steuereinrichtung die Ölförderpumpe (33) im dritten Behälter (31) derart aktiviert, dass im Frischölbehälter (12') stets mehr neues Öl als aufbereitetes Altöl vorhanden ist, wobei der Zufluss von aufbereitetem Altöl aus dem Altölsammelbehälter (11') und neuem Öl aus dem dritten Behälter (31) über Durchflussmesseinrichtungen (30') messbar ist.

17. Rundstrickmaschine mit einer Altölaufbereitungseinrichtung nach einem der Ansprüche 1 bis 16, wobei die Altölaufbereitungseinrichtung (10, 10') am Gestell der Rundstrickmaschine angeordnet ist.

18. Rundstrickmaschine nach Anspruch 17, **dadurch gekennzeichnet, dass** die Altölfördereinrichtung (10, 10') an der Rundstrickmaschine nachrüstbar ist.

## Claims

1. Waste oil processing device for a circular knitting machine having a waste oil collection container (11, 11') for catching the waste oil from the machine and having a storage container (12, 12') for filtered waste oil and new oil, and a connecting line (13, 13') arranged between the containers (11, 12; 11', 12') and at least one filter device (14, 16, 19; 14', 16', 19'), wherein fill level measuring devices (21, 22; 26, 27; 21', 22'; 26', 27') are provided in both containers (11, 12; 11', 12'), which fill level measuring devices are connected to a control device by means of which an oil feed pump (18, 18') of the waste oil collection container can be controlled, and in that the fill level measuring device (26, 27, 26', 27') in the container (12, 12') for new oil measures the exact oil level, thus ensuring that the mixing ratio between processed waste oil and new oil can be kept constant.

2. Waste oil processing device according to claim 1, **characterized in that** the connecting line (13, 13') is guided via a filter device (14, 14').

3. Waste oil processing device according to either claim 1 or claim 2, **characterized in that** the waste oil collection container (11') and the fresh oil container (12') are designed as separate chambers of a common container (32).

4. Waste oil processing device according to any of the preceding claims, **characterized in that** a coarse filter (16, 16') for the collected waste oil of the knitting machine is arranged at an inlet (15, 15') of the waste oil collection container (11, 11').

5. Waste oil processing device according to any of the preceding claims, **characterized in that** at least one magnet (17, 17') for separating the metal components in the waste oil is arranged in the waste oil collection container (11, 11').

6. Waste oil processing device according to claim 5, **characterized in that** one or more magnetic bars (17, 17') are arranged in the region of the inlet (15, 15') of the waste oil collection container.

7. Waste oil processing device according to any of the preceding claims, **characterized in that** the oil feed pump (18, 18') of the waste oil collection container draws in the oil through a fine filter (19, 19').

8. Waste oil processing device according to any of the preceding claims, **characterized in that** an oil feed pump (23, 23') for supplying the oil to the knitting machine is arranged in the fresh oil container (12, 12').

9. Waste oil processing device according to any of the preceding claims, **characterized in that** the fresh oil container (12) has an inlet (28) with a downstream coarse filter (29) for manual filling of new oil.

10. Waste oil processing device according to any of the preceding claims, **characterized in that** a flow monitoring device (30, 30') is arranged in the connecting line (13, 13').

11. Waste oil processing device according to any of the preceding claims, **characterized in that** the control device activates the oil feed pump (18, 18') of the waste oil collection container (11, 11') when the fill level measuring device (22, 23; 22', 23') detects that a maximum value for the oil level in the waste oil collection tank (11, 11') has been reached.

12. Waste oil processing device according to any of the preceding claims, **characterized in that** the oil feed pump (18, 18') of the waste oil collection container (12; 12') is deactivated when the fill level measuring device (26, 27; 26', 27') in the fresh oil container (12, 12') detects that a maximum value for the oil level in the fresh oil container (12, 12') has been exceeded.

13. Waste oil processing device according to any of the preceding claims, **characterized in that** the control device deactivates the oil feed pump (18, 18') of the waste oil collection container (11, 11') if the flow monitoring device (30, 30') detects no oil flow or only a very low oil flow in the connecting line (13, 13').

14. Waste oil processing device according to any of the preceding claims, **characterized in that** the control device deactivates the oil feed pumps (18, 23; 18', 23') of both containers (11, 12; 11', 12') when the fill level measuring device (21, 22; 26, 27; 21', 22'; 26', 27') in each container (11, 12; 11', 12') detects that a minimum value for the oil level has not been met.

15. Waste oil processing device according to any of the preceding claims, **characterized in that** it has a third container (31) with new oil, which container is connected to the fresh oil container (12') and has an oil feed pump (33) connected to the control device.

16. Waste oil processing device according to claim 15, **characterized in that** the control device activates the oil feed pump (33) in the third container (31) in such a way that there is always more new oil than processed waste oil in the fresh oil container (12'), it being possible to measure the inflow of processed waste oil from the waste oil collection container (11') and new oil from the third container (31) by means of flow measuring devices (30').

17. Circular knitting machine having a waste oil processing device according to any of claims 1 to 16, wherein the waste oil processing device (10, 10') is arranged on the frame of the circular knitting machine.

18. Circular knitting machine according to claim 17, **characterized in that** the circular knitting machine can be retrofitted with the waste oil conveying device (10, 10').

## Revendications

1. Dispositif de traitement de l'huile usagée pour un métier à tricoter circulaire comportant un récipient de collecte d'huile usagée (11, 11') permettant de recueillir l'huile usagée du métier et comportant un récipient de stockage (12, 12') pour de l'huile usagée filtrée et de l'huile neuve, ainsi qu'une conduite de raccordement (13, 13') disposée entre les récipients (11, 12 ; 11', 12') et au moins un dispositif filtre (14, 16, 19 ; 14', 16', 19'), des dispositifs de mesure de niveau de remplissage (21, 22 ; 26, 27 ; 21', 22' ; 26', 27') étant prévus dans les deux récipients, lesquels sont connectés à un dispositif de commande, au moyen duquel une pompe d'alimentation en huile (18, 18') du récipient de collecte d'huile usagée peut être commandée, sont fournis dans les deux récipients (11, 12 ; 11', 12'), et que le dispositif de mesure de niveau de remplissage (26, 27, 26', 27') mesure le niveau d'huile exact dans le récipient (12, 12') pour de l'huile neuve de telle sorte qu'il est garanti que le rapport de mélange entre de l'huile usagée traitée et de l'huile neuve peut être maintenu constant.

2. Dispositif de traitement de l'huile usagée selon la revendication 1, **caractérisé en ce que** la conduite de raccordement (13, 13') est guidée par l'intermédiaire d'un dispositif filtre (14, 14').

3. Dispositif de traitement de l'huile usagée selon la revendication 1 ou 2, **caractérisé en ce que** le récipient de collecte d'huile usagée (11') et le récipient d'huile fraîche (12') sont conçus sous la forme de chambres séparées d'un récipient (32) commun.

4. Dispositif de traitement de l'huile usagée selon l'une quelconque des revendications précédentes, **caractérisé en ce qu'**un filtre grossier (16, 16') pour l'huile usagée recueillie du métier à tricoter est disposé au niveau d'une entrée (15, 15') du récipient de collecte d'huile usagée (11, 11').

5. Dispositif de traitement de l'huile usagée selon l'une quelconque des revendications précédentes, **caractérisé en ce qu'**au moins un aimant (17, 17') permettant de séparer les composants métalliques dans l'huile usagée est disposé dans le récipient de collecte d'huile usagée (11, 11').

6. Dispositif de traitement de l'huile usagée selon la revendication 5, **caractérisé en ce qu'**au moins un barreau magnétique (17, 17') est disposé dans la zone de l'entrée (15, 15') du récipient de collecte d'huile usagée.

7. Dispositif de traitement de l'huile usagée selon l'une quelconque des revendications précédentes, **caractérisé en ce que** la pompe d'alimentation en huile (18, 18') du récipient de collecte d'huile usagée aspire de l'huile à travers un filtre fin (19, 19').

8. Dispositif de traitement de l'huile usagée selon l'une quelconque des revendications précédentes, **caractérisé en ce qu'**une pompe d'alimentation en huile (23, 23') permettant d'acheminer de l'huile au métier à tricoter est disposée dans le récipient d'huile fraîche (12, 12').

9. Dispositif de traitement de l'huile usagée selon l'une quelconque des revendications précédentes, **caractérisé en ce que** le récipient d'huile fraîche (12) comporte une entrée (28) comportant un filtre grossier (29) en aval pour le remplissage manuel d'huile neuve.

10. Dispositif de traitement de l'huile usagée selon l'une quelconque des revendications précédentes, **caractérisé en ce qu'**un dispositif de surveillance de débit (30, 30') est disposé dans la conduite de raccordement (13, 13').

11. Dispositif de traitement de l'huile usagée selon l'une quelconque des revendications précédentes, **caractérisé en ce que** le dispositif de commande active la pompe d'alimentation en huile (18, 18') du récipient de collecte d'huile usagée (11, 11') lorsque le dispositif de mesure de niveau de remplissage (22, 23 ; 22', 23') détecte l'atteinte d'une valeur maximale pour le niveau d'huile dans le récipient de collecte d'huile usagée (11, 11').

12. Dispositif de traitement de l'huile usagée selon l'une quelconque des revendications précédentes, **caractérisé en ce que** la pompe d'alimentation en huile (18, 18') du récipient de collecte d'huile usagée (12 ; 12') est désactivée lorsque le dispositif de mesure de niveau de remplissage (26, 27 ; 26', 27') dans le récipient d'huile fraîche (12, 12') détecte que le niveau d'huile dans le récipient d'huile fraîche (12, 12') est supérieur à une valeur maximale.

13. Dispositif de traitement de l'huile usagée selon l'une quelconque des revendications précédentes, **caractérisé en ce que** le dispositif de commande désactive la pompe d'alimentation en huile (18, 18') du récipient de collecte d'huile usagée (11, 11') lorsque le dispositif de surveillance de débit (30, 30') ne détecte aucun débit d'huile ou seulement un débit d'huile très faible dans la conduite de raccordement (13, 13').

14. Dispositif de traitement de l'huile usagée selon l'une quelconque des revendications précédentes, **caractérisé en ce que** le dispositif de commande désactive les pompes d'alimentation en huile (18, 23 ; 18', 23') des deux récipients (11, 12 ; 11', 12') lorsque le dispositif de mesure de niveau de remplissage (21, 22 ; 26, 27 ; 21', 22' ; 26', 27') détecte que, dans le récipient (11, 12 ; 11', 12') respectif, le niveau d'huile est inférieur à une valeur minimale.

15. Dispositif de traitement de l'huile usagée selon l'une quelconque des revendications précédentes, **caractérisé en ce qu'**il comporte un troisième récipient (31) comportant de l'huile neuve, lequel est raccordé au récipient d'huile fraîche (12') et comporte une pompe d'alimentation en huile (33) connectée au dispositif de commande.

16. Dispositif de traitement de l'huile usagée selon la revendication 15, **caractérisé en ce que** le dispositif de commande active la pompe d'alimentation en huile (33) dans le troisième récipient (31) de telle sorte que, dans le récipient d'huile fraîche (12'), il y a toujours plus d'huile neuve que d'huile usagée traitée, dans lequel l'afflux d'huile usagée traitée provenant du récipient de collecte d'huile usagée (11') et d'huile neuve provenant du troisième récipient (31) peut être mesuré par l'intermédiaire des dispositifs de mesure de débit (30').

17. Métier à tricoter circulaire comportant un dispositif de traitement de l'huile usagée selon l'une quelconque des revendications 1 à 16, dans lequel le dispositif de traitement d'huile usagée (10, 10') est disposé sur le cadre du métier à tricoter circulaire.

18. Métier à tricoter circulaire selon la revendication 17, **caractérisé en ce que** le dispositif d'alimentation en huile usagée (10, 10') peut être monté ultérieurement sur le métier à tricoter circulaire.
